Europäisches Patentamt

European Patent Office

Office européen des brevets

(11) Publication number: **0 319 770 B1**

# EUROPEAN PATENT SPECIFICATION

(45) Date of publication of patent specification: **18.03.92**  (51) Int. Cl.⁵: **C22B 59/00**, C22B 5/04

(21) Application number: **88119420.3**

(22) Date of filing: **22.11.88**

(54) **Process for recovering samarium and europium from the depleted bath mixture in the molten-salt-electrolysis preparation of mischmetal.**

(30) Priority: **24.11.87 JP 294121/87**

(43) Date of publication of application:
**14.06.89 Bulletin 89/24**

(45) Publication of the grant of the patent:
**18.03.92 Bulletin 92/12**

(84) Designated Contracting States:
**DE FR GB**

(56) References cited:
EP-A- 0 170 372      EP-A- 0 170 373
EP-A- 0 238 185      FR-A- 489 155
GB-A- 1 040 468      US-A- 3 153 571
US-A- 3 453 069      US-A- 3 486 843
US-A- 3 515 509      US-A- 3 616 326

PATENT ABSTRACTS OF JAPAN, vol. 11, no.
290 (C-447)[2737], 18th September 1987,
page 2737 C 447; & JP-A-62 83 433
(SANTOKU KINZOKU KOGYO K.K.) 16-04-1987

PATENT ABSTRACTS OF JAPAN, vol. 10, no.
139 (C-348)[2196], 22nd May 1986, page 2196
C 348; & JP-A-61 534 (TDK K.K.) 06-01-1986

PATENT ABSTRACTS OF JAPAN, vol. 10, no.

258 (C-370)[2314], 4th September 1986, page
2314 C 370; & JP-A-61 83 624 (MITSUBISHI
CHEM. IND. LTD) 28-04-1986

(73) Proprietor: **MITSUBISHI MATERIALS CORPO-
RATION
6-1, Otemachi 1-chome
Chiyoda-ku Tokyo(JP)**

(72) Inventor: **Kimura, Etsuji
1-25-7 Yutaka-cho
Kasukabe-shi Saitama-ken(JP)**
Inventor: **Sato, Kazusuke
1-15-1 Daito
Urawa-shi Saitama-ken(JP)**

(74) Representative: **von Füner, Alexander, Dr. et al
Patentanwälte v. Füner, Ebbinghaus, Finck
Mariahilfplatz 2 & 3
W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Field of the Invention

This invention relates to a process for recovering samarium (Sm) and europium (Eu) from the depleted bath mixture in the molten-salt-electrolysis preparation of mischmetal.

Background of the Invetnion

The so-called mischmetal is produced by electrolysis of a molten salt mixture containing a light rare earth metal (REM) source, which includes chloride electrolysis in a chloride bath and oxide electrolysis in a fluoride bath. In these electrolytic processes, unwanted byproducts accumulate and rare earth metals constituting mischmetal are depleted as the electrolysis proceeds. In the continuous process, a part of the depleted bath is periodically replaced with a fresh salt mixture.

The removed depleted bath mixture is usually discarded as is, or disposed of by sale at low price. In the case of the oxide electrolysis, Sm and Eu have come to be recovered in the recent years. In the recovery processes now practiced, however, the whole amount of the removed depleted bath mixture is directly subjected to wet chemical treatment, in which Sm and Eu are separated from other REM's by liquid-liquid extraction. Therefore, these processes involve difficult problems such as: (1) As the total amount of the removed depleted bath mixture is treated by a wet process, a large amount of liquid material must be treated, which means large scale equipment is required; (2) A large scale complicated extraction treatment is required to separate Sm and Eu from the other rare earth metals contained in the bath mixture, etc.

We conducted a study in search of a more convenient process for recovering Sm and Eu from the depleted bath mixture of the molten salt electrolysis, and found that Sm and Eu are concentrated in the remaining non-metallic phase if the bath mixture is reduced with calcium (Ca) and thereafter oxidized with air. Thus we accomplished this invention.

Summary of the Invention

This invention provides a process for recovering Sm and Eu from the depleted bath mixture of molten-salt-electrolysis preparation of mischmetal comprising reducing said depleted bath mixture with Ca, wherein Sm and Eu are retained in a non-metallic layer while the other rare earth metals are reduced to metallic state and separated, oxidizing the remaining non-metallic phase with air at a temperature of 700°C - 900°C so that Sm and Eu are concentrated as oxides thereof in the non-metallic phase, separating Sm and Eu by wet chemical procedures known per se, and finally recovering them as oxides.

In the preferred embodiment of this invention, the non-metallic phase in which Sm and Eu were concentrated as oxides is dissolved in a diluted hydrochloric acid solution, Ca is removed by addition of sulfuric acid and filtration, the solution is reduced with zinc, in which Eu is reduced to bivalent state while Sm remains trivalent, Eu is separated as $EuSO_4$ by addition of sulfuric acid and filtration, and the $EuSO_4$ is converted to carbonate, collected and subsequently calcined into $Eu_2O_3$ ; while the trivalent Sm in solution is converted into oxalate, collected and calcined into oxide.

The depleted bath mixture to which the present invention is applicable is the one derived from the chloride electrolysis or the one derived from the oxide electrolysis. In the case of chloride electrolysis, the depleted bath mixture comprises chlorides. In the case of the oxide electrolysis, the depleted bath mixture comprises fluorides, since the oxide electrolysis is carried out in a fluoride bath. In either case, the removed depleted bath mixture is treated with metallic Ca, preferably in a titanium crucible, at a temperature of 850°C - 950°C for reduction. The reduction is carried out at a temperature higher than 840°C, which is the melting point of Ca. But it is not advantageous to carry out the reduction at temperatures higher than 950°C because some ingredients of the bath mixture volatilize and loss of some bath ingredients is caused. It is preferred to allow the reaction product stand for about 1 hour after the reaction (stirring) is finished and before it is cooled to room temperature. In this reaction, the metals other than Sm and Eu are reduced to metallic state, while Sm and Eu remain in a non-metallic layer (the remaining bath mixture) is bivalent ions. Thus the metal layer and the non-metallic layer are separated. The non-metallic layer is collected in a suitable vessel, an iron crucible for instance, and oxidized with air at a temperature of 700°C - 900°C, usually by introducing air through a nozzle. The air oxidation does not proceed at a temperature not higher than 700°C and troubles such as corrosion of the reaction vessel by $O_2$ or $Cl_2$ will occur at temperatures higher than 900°C. Air supply of about 2 hours at the rate of 2 - 3 $cm^3$/min•g bath mixture will be required,

2

for instance. After oxidation, the non-metallic layer from the chloride electrolysis is separated into a chloride layer and an oxide layer; and the non-metallic layer from the oxide electrolysis is separated into a fluoride layer and an oxide layer. The amount of the oxide is about 1/5 by weight of the treated depleted bath mixture. That is, the Sm and Eu are concentrated by a factor of 5. Then the lower oxide layer is collected and Sm and Eu are recovered by a chemical process known per se.

Preferably, the oxide phase is dissolved in a hydrochloric acid solution of usually 0.1 - 5m. The contained Ca is precipitated and separated by addition of sulfuric acid and filtration, and the remaining solution is treated with metallic zinc, whereby the Eu is reduced to bivalent state while Sm remains trivalent. The Eu existing as $EuSO_4$ is converted to carbonate precipitate by addition of sodium carbonate and the carbonate is converted to $Eu_2O_3$ by calcination. On the other hand, the remaining trivalent Sm is precipitated by addition of oxalic acid and collected and calcined to $SM_2O_3$.

According to the recovery process of the present invention, Sm and Eu are efficiently concentrated in an oxide phase by a factor of 5. Therefore, the chemical treatment that follows can be carried out in smaller scale equipment.

Brief Explanation of the Invention

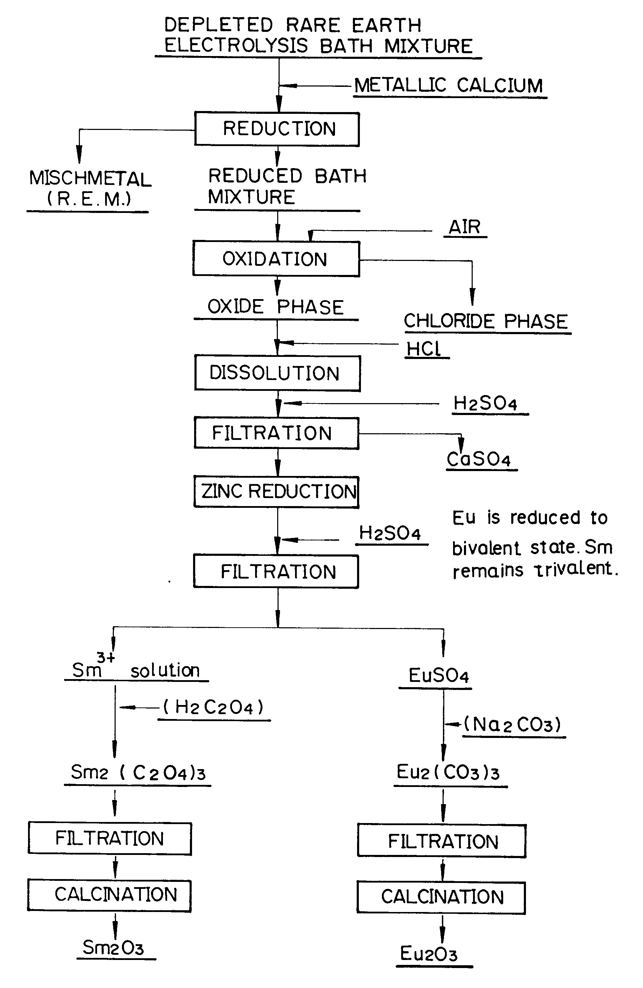

The attached drawing is a flow chart representing the process of the present invention for recovering Sm and Eu from the depleted bath mixture in the electrolytic preparation of mischmetal.

Specific Disclosure of the Invention

Now the invention will be specifically described by way of working examples. The attached flow chart illustrates the process steps carried out in the working examples.

Example 1

In a titanium crucible, 1.6kg of depleted bath mixture from chloride electrolysis was placed together with 350g of metallic Ca. The bath mixture used comprised about 75% by weight of chlorides of light rare earth metals and about 25% by weight of a $NaCl-CaCl_2$ solvent salt.

The crucible was heated to 900°C, at which the reaction mixture was stirred for 1 hour, and thereafter it was allowed to stand for another hour. After being cooled to room temperature, the bath mixture was found to have separated into a metallic layer and a non-metallic layer. 580g of metal and 1,300g of non-metallic phase were obtained. The non-metallic phase was placed in an iron crucible and kept at 800°C. Air was blown into the molten non-metallic phase through an immersed nozzle for oxidation at the rate of 3.2ℓ/min for 2 hours. Thus the non-metallic phase was separated into tow layers of a chloride phase and an oxide phase, and 260g of the lower oxide layer containing Sm and Eu as oxides was obtained.

The contents of Sm and Eu in the starting depleted bath mixture, in the non-metallic phase after reduction and in the oxide phase after air oxidation are shown in Table 1.

Table 1

|  | Sm | Eu |
| --- | --- | --- |
| Starting depleted bath mixture | 2.89 | 0.47 |
| Reduced depleted bath mixture | 2.64 | 0.57 |
| Non-metallic phase after oxidation | 10.86 | 3.07 |
|  |  | (% by wt.) |

The oxide phase obtained by air oxidation was dissolved in a 1m hydrochloric acid solution, the contained Ca was removed as $CaSO_4$ by addition of sulfuric acid and filtration, and the remaining solution was subjected to reduction with zinc. The Eu was then converted to $EuSO_4$, further converted to $EuCO_3$ by addition of sodium carbonate, collected and finally recovered as $Eu_2O_3$ by calcining. The Sm remaining trivalent in the solution was converted to oxalate, and the resulting oxalate was collected and calcined to oxide. The amounts of the obtained $Sm_2O_3$ and $Eu_2O_3$ were about 28g and about 8g and the purities were 99.3% and 95.6% respectively.

Example 2

In a titanium crucible, 1kg of depleted bath mixture from oxide electrolysis and 200g of metallic Ca were placed. The bath mixture used comprised about 70% by weight of fluorides of light rare earth metals and about 30% by weight of LiF-BaF$_2$ solvent salt. The mixture was heated at 900°C for 1 hour under stirring for reaction and thereafter allowed to stand for another hour. After being cooled, 340g of a metallic layer and 780g of a non-metallic layer were recovered. The non-metallic layer was collected and placed in an iron crucible and kept at 800°C. Air was blown in at the rate of 2ℓ/min for 2 hours for oxidation. After allowed to stand for 1 hour, the crucible was cooled to room temperature. The non-metallic layer was separated into an upper fluoride layer and a lower oxide layer. The latter weighed 150g.

The contents of Sm and Eu in the starting depleted bath mixture, in the bath mixture after reduction, and in the final oxide layer are shown in Table 2.

Table 2

|  | Sm | Eu |
|---|---|---|
| Starting depleted bath mixture | 2.22 | 0.35 |
| Reduced depleted bath mixture | 2.01 | 0.42 |
| Non-metallic phase after oxidation | 8.59 | 2.21 |
|  |  | (% by wt.) |

This oxide phase was dissolved in a 1m hydrochloric acid solution. Ca was removed as CaSO$_4$, Eu was reduced with zinc, and Sm$_2$O$_3$ and Eu$_2$O$_3$ were recovered by the same manner as in Example 1. The amounts of the recovered Sm$_2$O$_3$ and Eu$_2$O$_3$ were 11.6g and 3.1g and the purities were 99.5% and 97.3% respectively.

## Claims

1. A process for recovering Sm and Eu from the depleted bath mixture of molten-salt-electrolysis preparation of mischmetal comprising reducing said depleted bath mixture with Ca, wherein Sm and Eu are retained in a non-metallic layer while the other rare earth metals are reduced to metallic state and separated, oxidizing the remaining non-metallic phase with air at a temperature of 700°C - 900°C so that Sm and Eu are concentrated as oxides thereof in the non-metallic phase, separating Sm and Eu by wet chemical procedures known per se, and finally recovering them as oxides.

2. The process as set forth in Claim 1, wherein the oxide, in which Sm and Eu were concentrated, is dissolved in a diluted hydrochloric acid solution, Ca is removed by addition of sulfuric acid and filtration, the solution is reduced with zinc, in which Eu is reduced to bivalent state while Sm remains trivalent, Eu is separated as EuSO$_4$ by addition of sulfuric acid and filtration, and the EuSO$_4$ is converted to carbonate and subsequently calcined into Eu$_2$O$_3$ ; while the trivalent Sm in solution is converted into oxalate and calcined into oxide.

## Revendications

1. Un procédé de récupération de Sm et Eu à partir de bain usé d'électrolyse en sel fondu pour la préparation de mischmétal, comprenant la réduction du bain usé avec Ca, dans laquelle Sm et Eu sont retenus dans une couche non métallique tandis que les autres métaux de terre rare sont réduits à l'état métallique et séparés, l'oxydation de la phase non métallique restant avec de l'air à une température de 700°C à 900°C afin que Sm et Eu soient concentrés sous forme d'oxyde dans la phase non métallique, la séparation de Sm et Eu par des procédures chimiques par voie humide connues en elles-mêmes, et finalement la récupération de ceux-ci sous forme d'oxydes.

2. Le procédé selon la revendication 1, dans lequel l'oxyde, dans lequel Sm et Eu sont concentrés, est dissout dans une solution d'acide de chlorure dilué, Ca est retiré par addition d'acide sulfurique et filtration, la solution est réduite avec du zinc, dans lequel Eu est réduit à l'état bivalent tandis que Sm reste à l'état trivalent, Eu est séparé sous forme de EuSO$_4$ par addition d'acide sulfurique et filtration, et le EuSO$_4$ est converti en carbonate et subséquemment calciné en Eu$_2$O$_3$; tandis que le Sm trivalent en solution est converti en oxalate et calciné en oxyde.

**Patentansprüche**

1. Verfahren zur Rückgewinnung von Samarium und Europium aus verbrauchten Bädern für die Herstellung von Mischmetall durch Salzbadelektrolyse, wobei es die Reduzierung des verbrauchten Bades mit Ca, wobei Samarium und Europium in einer Nichtmetallschicht zurückgehalten werden, während die übrigen Seltenerdmetalle zum Metallzustand reduziert und abgetrennt werden, die Oxidation der zurückbleibenden Nichtmetallphase mit Luft bei 700 bis 900°C, so daß Samarium und Europium als Oxide in der Nichtmetallphase eingeengt werden, die Abtrennung von Samarium und Europium nach an sich bekannten chemischen Naßverfahren und schließlich ihre Abtrennung als Oxide umfaßt.

2. Verfahren nach Anspruch 1, worin das Oxid, in dem Samarium und Europium eingeengt wurden, in einer verdünnten Chlorwasserstoffsäurelösung gelöst, Calcium durch Zugabe von Schwefelsäure und Filtration entfernt, die Lösung mit Zink reduziert, wobei Europium zum zweiwertigen Zustand reduziert wird, während Samarium dreiwertig bleibt, Europium als $EuSO_4$ durch Zugabe von Schwefelsäure und Filtration abgetrennt und $EuSO_4$ in das Carbonat umgewandelt und nachfolgend zu $Eu_2O_3$ geglüht wird, während das dreiwertige Samarium in der Lösung in Oxalat umgewandelt und zum Oxid geglüht wird.

DEPLETED RARE EARTH
ELECTROLYSIS BATH MIXTURE

← METALLIC CALCIUM

REDUCTION

MISCHMETAL
(R.E.M.)

REDUCED BATH
MIXTURE

← AIR

OXIDATION

OXIDE PHASE

CHLORIDE PHASE

← HCl

DISSOLUTION

← $H_2SO_4$

FILTRATION

$CaSO_4$

ZINC REDUCTION

← $H_2SO_4$

FILTRATION

Eu is reduced to
bivalent state. Sm
remains trivalent.

$Sm^{3+}$ solution

← $(H_2C_2O_4)$

$Sm_2(C_2O_4)_3$

FILTRATION

CALCINATION

$Sm_2O_3$

$EuSO_4$

← $(Na_2CO_3)$

$Eu_2(CO_3)_3$

FILTRATION

CALCINATION

$Eu_2O_3$